# EUROPÄISCHE PATENTSCHRIFT

(11) **EP 3 138 776 B1**
(45) Veröffentlichungstag und Bekanntmachung des Hinweises auf die Patenterteilung: **12.06.2019**
(21) Anmeldenummer: 16450021.7
(22) Anmeldetag: 25.08.2016
(51) Int. Cl.: B64G 1/22, B64G 1/66, F16C 11/04, F16C 33/20

(54) **STELLMECHANISMUS**
POSITIONING MECHANISM
MECANISME DE REGLAGE

(30) Priorität: 25.08.2015 AT 5642015
(43) Veröffentlichungstag der Anmeldung: 08.03.2017
(73) Patentinhaber: RUAG Space GmbH, 1120 Wien (AT)
(72) Erfinder: JANU, Paul, A-1030 Wien (AT); NEUGEBAUER, Christian, A-1230 Wien (AT)
(74) Vertreter: Keschmann, Marc

(56) Entgegenhaltungen:
- EP-A1- 0 823 750
- EP-A2- 0 887 585
- DE-B3-102005 021 459
- US-A- 3 339 863
- US-A- 3 452 948
- US-A- 3 521 619

## Beschreibung

Die Erfindung betrifft einen Stellmechanismus zum Verstellen eines Moduls eines Raumflugkörpers umfassend einen Schwenkantrieb mit einem Gehäuse, eine Stellwelle, zumindest zwei Stützlager und ein lagerelement, wobei eine Abtriebswelle des Schwenkantriebs mit der Stellwelle verbunden ist und die Stellwelle durch die zumindest zwei Stützlager abgestützt ist, die in dem Lagerelenent angeordnet sind, wobei das Gehäuse des Schwenkantriebs am Lagerelement abgestützt ist.

Die Erfindung betrifft weiters einen Raumflugkörper, umfassend einen Stellmechanismus der eingangs genannten Art.

Ein derartiger Stellmechanismus kann insbesondere für Raumfahrtanwendungen eingesetzt werden, bei denen keine besonders hohe Präzision erforderlich ist, beispielsweise in Triebwerkseinstellungen, in Antennenausklappeinrichtungen oder Antennenausrichtungseinrichtungen.

Stelleinrichtungen haben die Aufgabe das jeweilige Modul mit dem Raumflugkörper mechanisch zu verbinden und dessen Ausrichtung relativ zum Raumflugkörper bei Bedarf zu verstellen. Zum Verstellen des Moduls sind Stelleinrichtungen mit wenigstens einem Verstellantrieb ausgestattet, wobei für jede Schwenkachse in der Regel ein eigener Schwenkantrieb vorgesehen ist.

Die Stelleinrichtung befindet sich während des Starts des Raumflugkörpers üblicherweise in einer Startposition, in der eine sichere und stabile Verbindung des Moduls mit dem Raumfahrzeug sichergestellt werden muss. Während des Starts, bei dem keine Verstellung des zu verstellenden Moduls erforderlich ist, sollen die Startlasten übertragen werden können. Zur Übertragung der Startlasten ist es bekannt, die Schwenklager der Stelleinrichtung so auszubilden, dass sie die beim Starten von Raumfahrzeugen auftretenden statischen und dynamischen Lasten übertragen können, wobei dies bei Wälzlagern die Einstellung einer hohen Vorspannung erfordert. Alternativ können die Schwenklager während des Startvorganges aus dem Lastpfad ausgekoppelt werden. Zu diesem Zweck ist meist die Verwendung einer gesonderten Haltevorrichtung, eines sogenannten ansteuerbaren "Hold Down and Release Mechanismus", vorgesehen, der das Modul relativ zum Raumfahrzeug in der vorgegebenen Startposition festhält und abstützt. Nach dem Start wird die feste Verbindung gelöst, wobei dies beispielsweise durch mechanisches Auftrennen mittels einer Zündung von Treibsätzen oder durch Abschmelzen eines Drahtes erfolgen kann, worauf das gelagerte Modul nur noch durch das oder die Schwenklager getragen wird. Derartige Treibsätze bzw. nicht explodierende Lösevorrichtungen führen zu einem zusätzlichen Entwicklungsaufwand und einer erhöhten Masse solcher Systeme. Im Rahmen der vorliegenden Erfindung soll daher ohne kommandiert ansteuerbare Haltevorrichtung das Auslangen gefunden werden können.

Übliche Stellvorrichtungen für Raumfahrtanwendungen sind in folgenden Ausführungen bekannt:

### Integrale Bauweise

Die beim Start der Rakete auf die Stellvorrichtung ausgeübten Kräfte und Biegemomente werden über dasselbe im Verstellmotor integrierte Wälzlagerpaar übertragen, das im Betrieb der Stellvorrichtung auch als Rotorlagerung oder Ausgangsstufenlagerung des Verstellmotors dient.

Ein Nachteil der integralen Bauweise ist die nur lokale Stützung der zu verstellenden Einheit an der Stelle des Verstellmotors.

### Stützlagerbauweise mit Wälzlagern

Eine Bauweise mit Stützlagern sieht zusätzlich zur Rotorlagerung oder Ausgangsstufenlagerung des Verstellmotors ein Paar von als Wälzlagern ausgebildeten Stützlagern vor. Die beim Start der Rakete auf die Stellvorrichtung ausgeübten Kräfte und Biegemomente werden über das Paar von Wälzlagern übertragen. Die Rotorlagerung oder Ausgangsstufenlagerung des Verstellmotors überträgt keine nennenswerten Lasten.

Ein Nachteil der Stützlagerbauweise mit Wälzlagern ist der mit der Wälzlagerung verbundene Herstellungsaufwand sowie der Aufwand für die weltraumtaugliche Schmierung und die nötigen Elemente zur Verstellung der Lagervorspannung. Die Notwendigkeit der Vorspannung ergibt sich bei Wälzlagern daraus, dass beim Start völlig andere Betriebsbedingungen herrschen als im Weltall. Ein Wälzlager muss beim Start relativ hoch vorgespannt werden, um die auftretenden Startlasten übertragen zu können. Im Weltall befindet sich das gelagerte Modul hingegen im Zustand der Schwerelosigkeit, wobei lediglich geringe Vibrationen und kaum mechanische Lasten übertragen werden müssen. Wälzlager, welche im Weltall im Einsatz sind, sollen sich durch eine möglichst hohe Lebensdauer bei hoher Genauigkeit und geringes Reibmoment auszeichnen und erfordern somit eine möglichst geringe Vorspannung, wobei im Zustand der Schwerelosigkeit sogar eine spielbehaftete Lagerung Vorteile bieten kann.

### Stützlagerbauweise mit Gleitlagern

Bei als Gleitlagern ausgebildeten Stützlagern können oben erwähnte Probleme im Zusammenhang mit der Vorspannung von Wälzlagern vermieden werden. Die beim Start der Rakete auf die Stellvorrichtung ausgeübten Kräfte und Biegemomente werden über ein Paar von Gleitlagern übertragen. Die Gleitlager bestehen meist aus zylindrischen Buchsen aus Kunststoff oder aus Metall mit Kunststoffbeschichtung. Die axialen Lasten können durch Anlaufscheiben, die Rotorlagerung oder die Ausgangsstufenlagerung des Verstellmotors übertragen werden.

Ein Nachteil der Stützlagerbauweise mit Gleitlagern ist allerdings das radiale Spiel, das zu einer ungenau definierten Lage der Drehachse führt und eine radial nachgiebige Kupplung zum Verstellmotor erfordert, sowie der Bauaufwand zur Abstützung der axialen Kräfte.

Die vorliegende Erfindung geht von einer Ausbildung mit Stützlagern aus, bei welcher die Abtriebswelle des Schwenkantriebs mit einer Stellwelle verbunden ist und die Stellwelle durch zumindest zwei Stützlager abgestützt ist. Der Schwenkantrieb umfasst hierbei eine eigene Lagerung, nämlich wenigstens eine von den Stützlagern gesonderte Rotorlagerung oder Ausgangsstufenlagerung des Verstellmotors. Ein Stellmechanismus der eingangs genannten Art wird in den Dokumenten US 3339863 A, US 3452948 und EP 0887585 A2 beschrieben.

Die vorliegende Erfindung zielt darauf ab, einen Stellmechanismus für Raumfahrtanwendungen mit möglichst geringer Masse zu schaffen, mit dem die Startlasten sicher übertragen werden können und welcher während des Betriebs im Weltall für das Übertragen wesentlich geringerer axialer und radialer Kräfte sowie Momente ausgelegt ist und ein geringes Reibmoment aufweist. Der Stellmechanismus soll ohne externe Haltevorrichtungen auskommen können.

Weiters soll der Stellmechanismus folgende Anforderungen erfüllen:
- Hohe übertragbare Kräfte und Biegemomente
- Hohe Steifigkeit der Lagerung zur Erzielung einer hohen Eigenfrequenz
- Spielfreiheit oder zumindest nur minimales Spiel
- Geringe Masse
- Geringe Herstellungskosten
- Hohe Zuverlässigkeit
- Verwendung von Materialien, die für den bei Raumfahrtanwendungen auftretenden Temperaturbereich geeignet sind und die bei Raumfahrtanwendungen der Strahlung widerstehen
- Die für die Herstellung verwendeten Prozesse müssen beherrscht und prüfbar sein

Zur Lösung dieser Aufgabe ist der Stellmechanismus der eingangs genannten Art erfindungsgemäß derart weitergebildet, dass das Gehäuse des Schwenkantriebs in Bezug auf die Rotation des Schwenkantriebs drehfest am Lagerelement abgestützt ist, insbesondere mittels einer Drehmomentstütze, und dass die drehfeste Abstützung eine Relativbewegung zwischen dem Gehäuse des Schwenkantriebs und dem Lagerelement in wenigstens einer radialen Richtung und/oder in axialer Richtung zulässt. Das Gehäuse des Schwenkantriebs ist somit nicht direkt am Raumflugkörper abgestützt, sondern am Lagerelement. Die mechanische Verbindung des Stellmechanismus einschließlich des Schwenkantriebs mit dem Raumflugkörper erfolgt somit über das Lagerelement, welches die wenigstens zwei Stützlager umfasst. Dadurch wird erreicht, dass die Lagerung des Schwenkantriebs, insbesondere die Rotorlagerung oder Ausgangsstufenlagerung des Verstellmotors, keinen anderen Kräften ausgesetzt ist, als solchen, die durch eine allfällige Relativbewegung zwischen dem Lagerelement und der Stellwelle verursacht werden. Solche Relativbewegungen werden durch eine geringe radiale Nachgiebigkeit des Stützlagers verursacht, können aber in einfacher Weise beispielsweise durch eine weiche Kupplung zwischen der Stellwelle und der Abtriebswelle des Schwenkantriebs ausgeglichen werden, sodass keine nennenswerten Zwangskräfte in der Stellvorrichtung auftreten.

Mit Rücksicht auf die Möglichkeit der Anordnung einer weichen Kupplung zwischen der Stellwelle und der Abtriebswelle des Schwenkantriebs kann bei einer nicht beanspruchten Ausführung vorgesehen sein, dass das Gehäuse des Schwenkantriebs mit dem Lagerelement starr verbunden ist. Hierbei werden also sämtliche Kräfte und Drehmomente vom Schwenkantrieb auf das Lagerelement übertragen.

Erfindungsgemäß ist jedoch vorgesehen, dass das Gehäuse des Schwenkantriebs in Bezug auf die Rotation des Schwenkantriebs drehfest am Lagerelement abgestützt ist, insbesondere mittels einer Drehmomentstütze, und dass die drehfeste Abstützung eine Relativbewegung zwischen dem Gehäuse des Schwenkantriebs und dem Lagerelement in wenigstens einer radialen Richtung und/oder in axialer Richtung zulässt. Die Relativbewegung des Schwenkantriebs in Axial- und/oder Radialrichtung erlaubt es, Fertigungstoleranzen oder Nachgiebigkeiten der Stützlager auszugleichen, sodass auf die Anordnung einer weichen Kupplung zwischen der Stellwelle und der Abtriebswelle des Schwenkantriebs verzichtet werden kann. Vielmehr können die Stellwelle und die Abtriebswelle des Schwenkantriebs starr miteinander verbunden sein. Das Zulassen einer Relativbewegung zwischen dem Gehäuse des Schwenkantriebs und dem Lagerelement in Axial- und/oder Radialrichtung verhindert, dass Zwangskräfte zwischen dem Schwenkantrieb und dem Lagerelement auftreten. Die Verbindung zwischen dem Gehäuse des Schwenkantriebs und dem Lagerelement muss zwingend lediglich eine Drehmomentstütze ausbilden, damit das vom Verstellmotor erzeugt Drehmoment eine Rotation der Abtriebswelle statt einer Rotation des Gehäuses bewirkt.

Die Stellwelle und die Abtriebswelle des Schwenkantriebs sind bevorzugt fluchtend angeordnet.

Weiters ist bevorzugt vorgesehen, dass die Stützlager Radial-Gleitlager sind, die bevorzugt mit einer Kunststoff-Gleitschicht versehen sind. Besonders bevorzugt sind Radial-Gelenklager, die mit einer Kunststoff-Verbund-Gleitschicht versehen sind. Hierbei ist keine Öl- oder Fett-Schmierung der Stützlager nötig. Die Kunststoff-(Verbund)-Gleitschicht wird so gewählt, dass diese der Strahlenbelastung im Weltraum widersteht und den notwendigen Temperaturbereich abdeckt. Die Stützlager sind weiters bevorzugt spielfrei oder spielarm ausgelegt. Gleitlager weisen gegenüber Wälzlagern den grundsätzlichen Vorteil auf, dass auf Vorspannungselemente verzichtet werden kann, wodurch ein einfacher Aufbau zu geringeren Kosten ermöglicht wird. Der Nachteil der geringen radialen Nachgiebigkeit von Gleitlagern kann, wie oben ausgeführt, durch eine weiche Kupplung zwischen der Stellwelle und der Abtriebswelle des Schwenkantriebs und/oder durch die Ausbildung der drehfesten Abstützung des Gehäuses des Schwenkantriebs am Lagerelement mit wenigstens einem radialen Freiheitsgrad ausgeglichen werden.

In einer bevorzugten Ausführung ist vorgesehen, dass eines der Stützlager die Stellwelle axial verschieblich aufnimmt und das andere Stützlager zur Übertragung axialer Kräfte zwischen der Stellwelle und dem Stützlager ausgebildet ist. Dadurch ist gewährleistet, dass es zwischen den Stützlagern nicht zu axialen Zwangskräften kommen kann, bspw. durch Fertigungstoleranzen oder thermische Ausdehnungen.

Weiters ist bevorzugt vorgesehen, dass die Stellwelle an der dem zu verstellenden Element abgewandten Seite eines der wenigstens zwei Stützlager mit der Abtriebswelle verbunden ist. Die Abtriebswelle ist also nicht zwischen den Stützlagern, sondern außerhalb des durch die Stützlager begrenzten Bereichs angeordnet. Dadurch ist ein leichterer Zugang zu der Stellwelle und insbesondere zum Schwenkantrieb gewährleistet.

Bevorzugt ist vorgesehen, dass die Abtriebswelle mit der Stellwelle starr verbunden ist. Diese Ausführung ist insbesondere dann bevorzugt, wenn die Abstützung des Schwenkantriebes axial- und radialverschieblich ausgebildet ist, sodass lediglich das Drehmoment übertragen wird. Diese starre Verbindung hat den Vorteil, dass weniger bewegliche Teile verwendet werden und daher auch ein geringerer Fertigungs- und Wartungsaufwand für die Verbindung der Abtriebswelle mit der Stellwelle nötig ist.

Alternativ ist vorgesehen, dass die Abtriebswelle mit der Stellwelle über eine Kupplung verbunden ist. Diese Ausführung hat insbesondere den Vorteil, dass der Schwenkantrieb starr mit dem Lagerelement verbunden sein kann, weil die Axial- bzw. Radialkräfte durch die Kupplung ausgeglichen werden und keine Zwangskräfte entstehen können.

Eine weitere bevorzugte Ausführung sieht vor, dass der Schwenkantrieb von einem Verstellmotor, insbesondere einem Elektromotor gebildet ist. Elektromotoren haben sich unter den besonderen, im Weltraum herrschenden Bedingungen als besonders zuverlässig erwiesen. Besonders bevorzugt ist der Schwenkantrieb ein Schrittmotor. Dadurch kann die Verstellung besonders einfach und zuverlässig durchgeführt werden.

Weiters ist bevorzugt vorgesehen, dass die Stellwelle mit einem zu verstellenden Modul verbunden ist. Dieses Modul kann insbesondere ein Triebwerk oder eine Antenne umfassen.

Die Erfindung betrifft weiters einen Raumflugkörper, umfassend einen erfindungsgemäßen Stellmechanismus. Der Raum-flugkörper ist bspw. ein Satellit oder eine andere, für den Betrieb im Weltraum ausgelegte Vorrichtung.

Bevorzugt ist vorgesehen, dass die Abstützung des Gehäuses des Schwenkantriebs am Lagerelement durch zumindest eine mechanische Stütze gebildet ist. Hierbei hat sich insbesondere eine im Wesentlichen L-förmige Stütze als besonders geeignet herausgestellt, wobei das eine Ende der Stütze mit dem Gehäuse und das andere Ende mit dem Lagerelement verbunden ist. Weiters ist bevorzugt vorgesehen, dass die Stütze mit dem Lagerelement zumindest teilweise einstückig verbunden ist. Insbesondere ist die Stütze außerhalb der Drehachse des Schwenkantriebs am Gehäuse angebracht.

Weiters ist es bevorzugt, dass das Lagerelement im Wesentlichen U-förmig ausgebildet ist, wobei die Stützlager jeweils in einem Schenkel des Lagerelements angeordnet sind. Hierbei erstreckt sich die Stellwelle bevorzugt zwischen den Stützlagern, also über den durch die Schenkel des Lagerelements gebildeten Bereich.

Die Abtriebswelle des Schwenkantriebs und die Stellwelle sind bevorzugt koaxial angeordnet, wodurch eine einfache Verbindung zwischen den beiden Wellen möglich ist. Alternativ ist es im Rahmen der Erfindung auch möglich, dass die beiden Wellen nicht koaxial zueinander angeordnet sind, sondern bspw. im Wesentlichen parallel oder in einem Winkel zueinander.

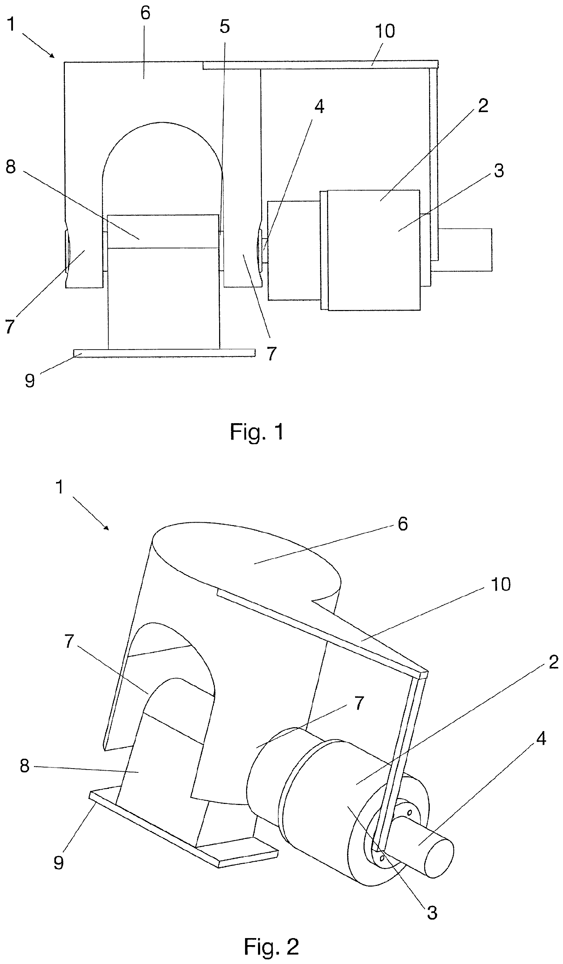

Die Erfindung wird nachfolgend anhand von in der Zeichnung schematisch dargestellten Ausführungsbeispielen näher erläutert. In dieser zeigen Fig. 1 einen erfindungsgemäßen Stellmechanismus in Seitenansicht und Fig. 2 den erfindungsgemäßen Stellmechanismus gemäß Fig. 1 in perspektivischer Ansicht.

In Fig. 1 ist mit 1 ein erfindungsgemäßer Stellmechanismus bezeichnet. Der Stellmechanismus 1 umfasst einen Schwenkantrieb 2, bspw. einen Elektromotor, mit einem Gehäuse 3. Der Schwenkantrieb 2 weist eine Abtriebswelle 4 auf, die mit einer Stellwelle 5 verbunden ist, um die Stellwelle 5 zur Rotation anzutreiben. Die Stellwelle 5 ist mithilfe von zwei, in einem Lagerelement 6 angeordneten, als Gleitlager ausgebildeten Stützlagern 7 gelagert. Die Stellwelle 5 ist weiters drehfest mit einem Verbindungselement 8 verbunden. Das Verbindungselement 8 umfasst eine Montageplatte 9 zur Verbindung mit einem nicht dargestellten Modul eines Raumflugkörpers. Das Lagerelement 6 ist im Wesentlichen U-förmig ausgebildet, wobei die Schenkel jeweils ein Stützlager aufweisen und die Stellwelle 5 sowie das Verbindungselement 8 im Wesentlichen in dem zwischen den Schenkeln ausgebildeten Freiraum angeordnet sind. Weiters ist eine im Wesentlichen L-förmige Stütze 10 vorgesehen, die das Gehäuse 3 des Schwenkantriebs 2 mit dem Lagerelement 6 abstützend verbindet. Die Stütze 10 ist relativ zum Gehäuse 3 oder dem Lagerelement 6 in eine oder mehrere Richtungen beweglich, sodass lediglich das Drehmoment und gegebenenfalls eine Kraft in Axialrichtung zwischen dem Gehäuse 3 und dem Lagerelement 6 übertragen werden kann. Die Abtriebswelle 4 des Schwenkantriebs 2 kann entweder starr oder mithilfe einer (nicht dargestellten) Kupplung mit der Stellwelle 5 verbunden sein. Die Stützlager 7 sind bevorzugt Gleitlager, besonders bevorzugt Radial-Gelenklager. Im Betrieb ist das Lagerelement 6 an einem nicht dargestellten Raumflugkörper, bspw. einem Satelliten befestigt.

In Fig. 2 ist der erfindungsgemäße Stellmechanismus 1 gemäß Fig. 1 in perspektivischer Ansicht dargestellt, wobei gleiche Zeichen gleiche Teile bezeichnen. Insbesondere ist dargestellt, dass die Stütze 10 außerhalb der Achse des Stellmotors 2 am Gehäuse 3 angeordnet ist. Weiters ist die Stütze 10 zum Teil einstückig mit dem Lagerelement 6 ausgebildet.

Die Verstellung eines an dem Verbindungselement 8, insbesondere der Montageplatte 9 befestigten Moduls wird durch den Schwenkantrieb 2 durchgeführt, indem eine Rotation der Abtriebswelle 4 des Schwenkantriebs 2 auf die Stellwelle 5 übertragen wird, wodurch das Verbindungselement 8 und damit auch das daran befestigte Modul bewegt werden.

Die in den Ausführungsbeispielen beschriebenen Ausbildungen haben zusammengefasst die folgenden Vorteile:
- Hohe übertragbare Kräfte und Biegemomente: Gleitlager, insbesondere Radial-Gelenklager können im Vergleich zu Wälzlagern bei gleicher Baugröße deutlich höhere Lasten übertragen. Die beschriebene Kombination zweier Gleitlager bzw. insbesondere Radial-Gelenklager führt zu hohen übertragbaren Biegemomenten.
- Hohe Steifigkeit der Lagerung zur Erzielung einer hohen Eigenfrequenz: Der beschriebene Stellmechanismus besitzt kurze Lastpfade und direkte Lasteinleitungen zur Erzielung einer hohen Steifigkeit. Die Steifigkeit der Radial-Gelenklager selbst ist ebenfalls hoch.
- Spielfreiheit oder zumindest nur minimales Spiel: es sind spielfreie oder spielarme Radial-Gelenklager eingesetzt. Die Zunahme des Spiels der Radial-Gelenklager über die Lebensdauer ist bei typischen Anwendungen vernachlässigbar gering.
- Geringe Masse: Die beschriebene Stellvorrichtung besitzt kurze Lastpfade und direkte Lasteinleitungen zur Erzielung geringer Masse. Die eingesetzten Stützlager besitzen im Vergleich zu Wälzlagern vergleichbarer Tragfähigkeit eine geringe Baugröße und Masse.
- Geringe Herstellungskosten: Aufgrund möglicher einfacher Bauteilgeometrien ist der Fertigungsaufwand für die mechanischen Teile gering, der Herstellungsaufwand für weltraumtaugliche Schmierung oder nötige Vorspannelemente für Wälzlager entfällt.
- Hohe Zuverlässigkeit: Die geringe Teilezahl bewirkt eine hohe Zuverlässigkeit.
- Es werden ausschließlich Materialien verwendet, die für den bei Raumfahrtanwendungen auftretenden Temperaturbereich geeignet sind und die bei Raumfahrtanwendungen der auftretenden Strahlung widerstehen. Insbesondere ist für die Gleitschicht der Lager eine Ausführung eingesetzt, die der Strahlenbelastung im Weltraum widersteht.
- Die für die Herstellung verwendeten Prozesse sind beherrscht und prüfbar.

## Patentansprüche

1. Stellmechanismus zum Verstellen eines Moduls eines Raumflugkörpers umfassend einen Schwenkantrieb mit einem Gehäuse (3), eine Stellwelle (5), zumindest zwei Stützlager (7) und ein Lagerelement (6), wobei eine Abtriebswelle (4) des Schwenkantriebs (2) mit der Stellwelle (5) verbunden ist und die Stellwelle (5) durch die zumindest zwei Stützlager (7) abgestützt ist, die in dem Lagerelement (6) angeordnet sind, wobei das Gehäuse (3) des Schwenkantriebs (2) am Lagerelement (6) abgestützt ist, **dadurch gekennzeichnet, dass** das Gehäuse (3) des Schwenkantriebs (2) in Bezug auf die Rotation des Schwenkantriebs (2) drehfest am Lagerelement (6) abgestützt ist, insbesondere mittels einer Drehmomentstütze, und dass die drehfeste Abstützung eine Relativbewegung zwischen dem Gehäuse (3) des Schwenkantriebs (2) und dem Lagerelement (6) in wenigstens einer radialen Richtung und/oder in axialer Richtung zulässt.

2. Stellmechanismus nach Anspruch 1, **dadurch gekennzeichnet, dass** die Stützlager (7) Radial-Gleitlager sind, die bevorzugt mit einer Kunststoff-Gleitschicht versehen sind.

3. Stellmechanismus nach einem der Ansprüche 1 oder 2, **dadurch gekennzeichnet, dass** eines der Stützlager (7) die Stellwelle (5) axial verschieblich aufnimmt und das andere Stützlager (7) zur Übertragung axialer Kräfte zwischen der Stellwelle (5) und dem Stützlager (7) ausgebildet ist.

4. Stellmechanismus nach einem der Ansprüche 1 bis 3, **dadurch gekennzeichnet, dass** die Stellwelle (5) an der dem zu verstellenden Element abgewandten Seite eines der wenigstens zwei Stützlager (7) mit der Abtriebswelle (4) verbunden ist.

5. Stellmechanismus nach einem der Ansprüche 1 bis 4, **dadurch gekennzeichnet, dass** die Abtriebswelle (4) mit der Stellwelle (5) starr verbunden ist.

6. Stellmechanismus einem der Ansprüche 1 bis 4, **dadurch gekennzeichnet, dass** die Abtriebswelle (4) mit der Stellwelle (5) über eine Kupplung verbunden ist.

7. Stellmechanismus nach einem der Ansprüche 1 bis 6, **dadurch gekennzeichnet, dass** der Schwenkantrieb (2) von einem Verstellmotor, insbesondere Elektromotor gebildet ist.

8. Stellmechanismus nach einem der Ansprüche 1 bis 7, **dadurch gekennzeichnet, dass** die Abtriebswelle (4) mit einem zu verstellenden Modul verbunden ist.

9. Raumflugkörper, umfassend einen Stellmechanismus (1) nach einem der Ansprüche 1 bis 8.

## Claims

1. An actuating mechanism for adjusting a module of a spacecraft, comprising a pivot drive with a housing (3), an actuating shaft (5), at least two support bearings (7) and a bearing element (6), wherein an output shaft (4) of the pivot drive (2) is connected to the actuating shaft (5) and the actuating shaft (5) is supported by the at least two support bearings (7), which are disposed in the bearing element (6), wherein the housing (3) of the pivot drive (2) is supported on the bearing element (6), **characterized in that** the housing (3) of the pivot drive (2) is supported on the bearing element (6) in a torque-proof manner relative to the rotation of the pivot drive (2), in particular by means of a torque support, and that the torque-proof support allows for a relative movement between the housing (3) of the pivot drive (2) and the bearing element (6) in a least one radial direction and/or in the axial direction.

2. An actuating mechanism according to claim 1, **characterized in that** the support bearings (7) are radial slide bearings preferably provided with a synthetic sliding layer.

3. An actuating mechanism according to claim 1 or 2, **characterized in that** one of the support bearings (7) receives the actuating shaft (5) in an axially displaceable manner, and the other support bearing (7) is configured to transmit axial forces between the actuating shaft (5) and the support bearing (7) .

4. An actuating mechanism according to any one of claims 1 to 3, **characterized in that** the actuating shaft (5) is connected to the output shaft (4) on the side facing away from the element to be adjusted, of one of the at least two support bearings (7).

5. An actuating mechanism according to any one of claims 1 to 4, **characterized in that** the output shaft (4) is rigidly connected to the actuating shaft (5).

6. An actuating mechanism according to any one of claims 1 to 4, **characterized in that** the output shaft (4) is connected to the actuating shaft (5) via a coupling.

7. An actuating mechanism according to any one of claims 1 to 6, **characterized in that** the pivot drive (2) is comprised of a variable-displacement motor, in particular an electromotor.

8. An actuating mechanism according to any one of claims 1 to 7, **characterized in that** the output shaft (4) is connected to a module to be adjusted.

9. A spacecraft comprising an actuating mechanism (1) according to any one of claims 1 to 8.

## Revendications

1. Mécanisme de réglage pour le réglage d'un module d'un engin spatial comprenant un entraînement pivotant avec un boîtier (3), un arbre de réglage (5), au moins deux paliers d'appui (7) et un élément de palier (6), dans lequel un arbre de sortie (4) de l'entraînement pivotant (2) est raccordé à l'arbre de réglage (5) et l'arbre de réglage (5) est supporté par les au moins deux paliers d'appui (7) qui sont agencés dans l'élément de palier (6), dans lequel le boîtier (3) de l'entraînement pivotant (2) est supporté sur l'élément de palier (6), **caractérisé en ce que** le boîtier (3) de l'entraînement pivotant (2) est supporté par rapport à la rotation de l'entraînement pivotant (2) solidaire en rotation sur l'élément de palier (6), en particulier au moyen d'un support de couple, et **en ce que** l'appui solidaire en rotation permet un mouvement relatif entre le boîtier (3) de l'entraînement pivotant (2) et l'élément de palier (6) dans au moins un sens radial et/ou dans le sens axial.

2. Mécanisme de réglage selon la revendication 1, **caractérisé en ce que** les paliers d'appui (7) sont des paliers glissants radiaux qui sont pourvus de préférence d'une couche glissante en matière plastique.

3. Mécanisme de réglage selon l'une quelconque des revendications 1 ou 2, **caractérisé en ce qu'**un des paliers d'appui (7) reçoit de manière mobile axialement l'arbre de réglage (5) et l'autre palier d'appui (7) est conçu pour la transmission de forces axiales entre l'arbre de réglage (5) et le palier d'appui (7).

4. Mécanisme de réglage selon l'une quelconque des revendications 1 à 3, **caractérisé en ce que** l'arbre de réglage (5) est raccordé, sur le côté opposé à l'élément à régler d'un des au moins deux paliers d'appui (7), à l'arbre de sortie (4).

5. Mécanisme de réglage selon l'une quelconque des revendications 1 à 4, **caractérisé en ce que** l'arbre de sortie (4) est raccordé rigidement à l'arbre de réglage (5).

6. Mécanisme de réglage selon l'une quelconque des revendications 1 à 4, **caractérisé en ce que** l'arbre de sortie (4) est raccordé à l'arbre de réglage (5) par le biais d'un accouplement.

7. Mécanisme de réglage selon l'une quelconque des revendications 1 à 6, **caractérisé en ce que** l'entraînement pivotant (2) est formé par un moteur de réglage, en particulier un moteur électrique.

8. Mécanisme de réglage selon l'une quelconque des revendications 1 à 7, **caractérisé en ce que** l'arbre de sortie (4) est raccordé à un module à régler.

9. Engin spatial comprenant un mécanisme de réglage (1) selon l'une quelconque des revendications 1 à 8.
